# DEMANDE DE BREVET EUROPEEN

(11) **EP 4 574 349 A1**
(43) Date de publication de la demande: **25.06.2025**
(21) Numéro de dépôt: 24219324.1
(22) Date de dépôt: 12.12.2024
(51) Int. Cl.: B25J 9/16, B65G 47/91

(54) **PROCÉDÉ DE CONTRÔLE DE VIDE POUR UN SYSTÈME PRÉHENSEUR PNEUMATIQUE**

(30) Priorité: 18.12.2023 FR 2314447
(71) Demandeur: Exotec Product France, 59170 Croix (FR)
(72) Inventeur: CAGNAC, Bastien, 59290 Wasquehal (FR); SIX, Benjamin, 59000 Lille (FR); MOURET, Julien, 59700 Marcq-en-Baroeul (FR)
(74) Mandataire: Plasseraud IP

(57) **Abrégé**

Procédé (P) de contrôle de vide pour un système préhenseur pneumatique (10) qui comprend une source de vide (26), une pluralité d'organes de préhension (13) et un circuit pneumatique (20), le circuit pneumatique (20) comprenant une pluralité de vannes (27), chaque vanne (27) étant associée à un ensemble correspondant d'organes de préhension et étant configurée pour commuter entre une position fermée (F) et une position ouverte (O), le système préhenseur pneumatique (10) comprenant un capteur de vide (28) adapté pour mesurer un niveau de vide dans le circuit pneumatique (20) entre la source de vide (26) et la pluralité de vannes (27).

## Description

### Domaine technique

La présente description se rapporte à un procédé de contrôle de vide pour un système préhenseur pneumatique. La présente description se rapporte également à un programme informatique comportant des instructions pour la mise en oeuvre d'un tel procédé. La présente description se rapporte encore à un support d'enregistrement lisible par un ordinateur sur lequel est enregistré un programme pour la mise en oeuvre du procédé. Enfin, la description se rapporte à un système préhenseur adapté pour la mise en oeuvre du procédé.

### Technique antérieure

Dans le domaine de la logistique, il est connu de réaliser une opération de préhension d'un objet par un dispositif robotisé comprenant un bras en général mobile selon 5 ou 6 axes, et muni à son extrémité mobile d'un ou plusieurs organes de préhension, comportant chacun par exemple une ventouse et/ou une mousse, permettant d'assurer la préhension de l'objet.

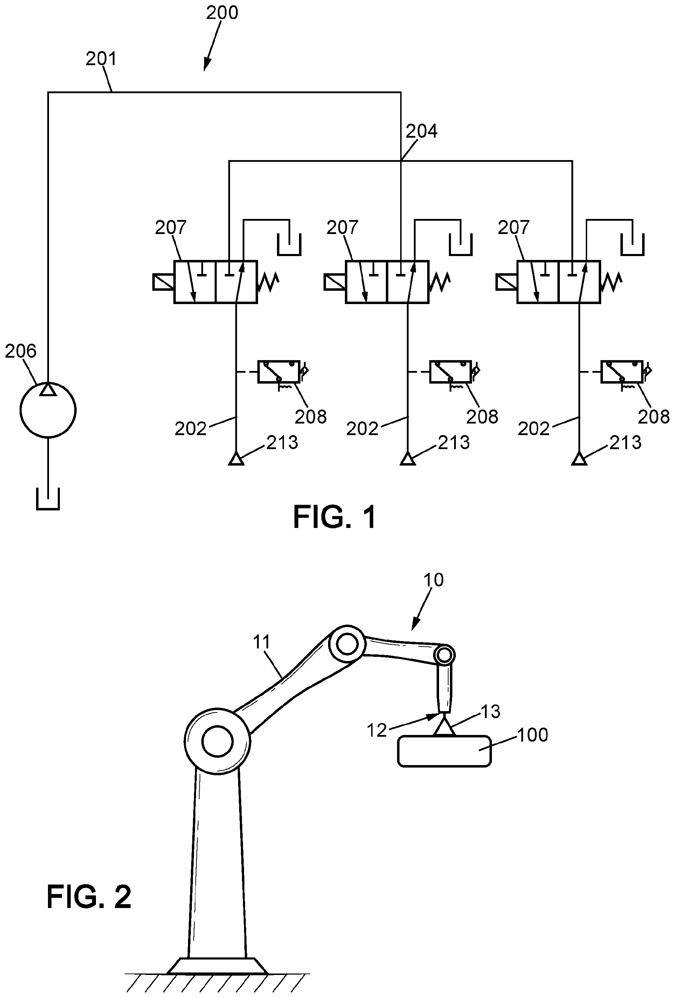

Pour que chaque organe de préhension puisse saisir l'objet, comme représenté à la figure 1, il est en général prévu un circuit pneumatique 200 comportant une source de vide 206, telle qu'une pompe à vide mécanique ou un générateur de vide venturi, configurée pour créer, au niveau de chaque organe de préhension, une dépression nécessaire à la saisie de l'objet.

Les objets peuvent être de tailles, de formes et de poids différents, voire également de différentes textures de surface, d'où la nécessité de prévoir une pluralité d'organes de préhension 213. Dans ce cas, le circuit pneumatique comprend généralement une conduite principale 201 au niveau de laquelle est disposée la source de vide 206 et une pluralité de conduites secondaires 202 reliées fluidiquement à la conduite principale 201 au niveau d'un noeud 204, chaque conduite secondaire 202 desservant l'un parmi la pluralité d'organes de préhension 213. Il peut être également prévu, au niveau de chaque conduite secondaire 202, un moyen sélectif d'ouverture/fermeture, comme une vanne 207, permettant d'ouvrir ou fermer à l'atmosphère le circuit pneumatique 200 entre la source de vide 206 et l'organe de préhension 213 correspondant desservi par ladite conduite secondaire 202 pour désactiver ou activer ponctuellement cet organe de préhension 213, respectivement. En d'autres termes, chaque vanne 207 peut commuter entre une position fermée dans laquelle l'organe de préhension 213 correspondant est en communication fluidique avec la source de vide 206 et est donc soumis au niveau de vide (ou pression) établi par la source de vide 206 ; et une position ouverte dans laquelle l'organe de préhension 213 est en communication fluidique avec l'atmosphère et est donc soumis à la pression atmosphérique. Dans la position fermée de la vanne 207, l'organe de préhension 213 correspondant est apte à participer à la préhension de l'objet, et dans la position ouverte de la vanne 207, l'organe de préhension 213 correspondant est désactivé, il ne peut pas participer à la préhension de l'objet.

Afin de réaliser l'opération de préhension dans de bonnes conditions, un niveau de vide suffisant est nécessaire au niveau de chaque organe de préhension 213. Par exemple, selon la forme et/ou la texture de l'objet à saisir, l'un ou plus des organes de préhension peut ne pas être en contact direct et étroit avec l'objet à saisir, créant alors une fuite vers l'atmosphère qui impacte le niveau de vide au niveau des autres organes de préhension. Pour cette raison, il est souhaitable de pouvoir vérifier le niveau de vide au niveau de chaque organe de préhension 213. En effet, par exemple, afin de garantir un niveau de préhension suffisant du dispositif lors d'une opération de préhension, il peut être nécessaire de désactiver l'un ou plusieurs organes de préhensions 213 parmi la pluralité d'organes de préhension dans le cas où un niveau de vide insuffisant, voire une fuite, est détecté au niveau desdits un ou plusieurs organes de préhension.

Une solution connue du document WO 2016/010968 consiste à disposer un capteur de vide 208 au niveau de chaque conduite secondaire entre le noeud 204 et l'organe de préhension 213 correspondant pour mesurer une pression de vide au niveau de chaque organe de préhension 213. Les organes de préhension pour lesquels les capteurs de pression correspondant indiquent les pressions de vide les plus faibles ou en-dessous d'un seuil prédéterminé sont désactivés.

Toutefois, cette solution présente l'inconvénient de nécessiter un capteur 208 pour chaque organe de préhension 213. On comprend que dans le cas où le dispositif comporte un nombre important d'organes de préhension 213 alors un nombre aussi important de capteurs 208 est nécessaire, ce qui augmente le coût du dispositif et sa complexité. D'autre part, du fait de la communication fluidique entre les conduites secondaires 202 au niveau du noeud 204, plusieurs capteurs de vide 208 peuvent indiquer un niveau de vide insuffisant malgré qu'un seul organe de préhension 213 parmi la pluralité d'organes de préhension 213 présente un niveau de vide insuffisant, voire une fuite. Il s'avère alors compliqué d'identifier avec certitude ledit organe de préhension 213 qui présente un niveau de vide insuffisant, voire une fuite, parmi la pluralité d'organes de préhension 213.

Une autre solution divulguée dans le document DE 10 2017 110998 A1 consiste à prévoir un capteur de vide entre une source de vide et une pluralité de ventouses disposées en parallèle, chacune des ventouses étant connectée ou déconnectée de la source de vide par un commutateur. Afin d'identifier une ventouse défaillante, les ventouses, initialement déconnectées de la source de vide, sont connectées de façon séquentielle à la source de vide. Après chaque connexion, le niveau de vide est déterminé pour identifier une éventuelle fuite d'une ventouse. Cette solution présente l'inconvénient d'être relativement longue à mettre en oeuvre puisqu'elle nécessite de connecter l'une après l'autre chacune des ventouses à la source de vide avant la saisie d'un objet, même lorsqu'aucune ventouse n'est défaillante.

### Résumé

Il est proposé un procédé de contrôle de vide pour un système préhenseur pneumatique qui comprend une source de vide, une pluralité d'organes de préhension et un circuit pneumatique configuré pour mettre en communication fluidique la pluralité d'organes de préhension avec la source de vide, le circuit pneumatique comprenant une pluralité de vannes, chaque vanne étant associée à un ensemble correspondant d'organes de préhension comprenant un ou plusieurs organes de préhension parmi la pluralité d'organes de préhension, chaque vanne étant configurée pour commuter entre une position fermée dans laquelle ladite vanne met en communication fluidique ledit ensemble d'organes de préhension correspondant avec la source de vide et une position ouverte dans laquelle ladite vanne met en communication fluidique ledit ensemble d'organes de préhension correspondant avec l'atmosphère, le système préhenseur pneumatique comprenant en outre au moins un capteur de vide adapté pour mesurer un niveau de vide dans le circuit pneumatique entre la source de vide et la pluralité de vannes, le procédé comprenant :
- /A/ l'activation de la source de vide en vue d'établir une dépression entre la pluralité d'organes de préhension et un objet à saisr,
- /B/ la commutation de la pluralité de vannes dans leur position fermée respective,
- ICI le positionnement de la pluralité d'organes de préhension sur l'objet,
- /D/ la mesure d'un niveau de vide de référence par ledit capteur de vide,
le procédé comprenant la séquence /K/ suivante :
- /Ka/ la commutation dans la position ouverte d'au moins une vanne parmi la pluralité de vannes,
- /Kb/ la mesure d'un niveau de vide par ledit capteur de vide,
- /Kc/ la comparaison du niveau de vide mesuré avec le niveau de vide de référence,
- /Kd/ la détermination que l'un au moins des organes de préhension de l'ensemble d'organes de préhension correspondant à ladite au moins une vanne présente une fuite dans le cas où le niveau de vide mesuré est supérieur au niveau de vide de référence.

La séquence /K/ peut comprendre une étape /Kd'/ de commutation de ladite au moins une vanne dans la position fermée dans le cas où le niveau de vide mesuré est égal au niveau de vide de référence.

L'étape /D/ peut comprendre une étape subsidiaire qui comprend :
- la comparaison du niveau de vide de référence à un niveau de vide seuil, le niveau de vide seuil étant déterminé pour correspondre à un niveau de vide suffisant pour permettre la préhension de l'objet, et
- la détermination que la pluralité d'organes de préhension est apte à saisir l'objet si le niveau de vide de référence est supérieur ou égal au niveau de vide seuil.

La séquence /K/ peut ne pas être effectuée lorsque le niveau de vide de référence est supérieur ou égal au niveau de vide seuil.

L'étape /Ka/ peut comprendre la commutation dans la position ouverte respective d'une vanne unique parmi la pluralité de vannes.

La séquence/K/ peut être réitérée avec au moins une autre vanne parmi la pluralité de vannes.

La séquence /K/ peut être réitérée avec chaque vanne parmi la pluralité de vannes.

La séquence /K/ peut comprendre une étape /Ke/ consécutive directement ou indirectement de l'étape /Kd/ et qui comprend :
- la comparaison du niveau de vide mesuré lors de l'étape /Kc/ par rapport au niveau de vide seuil et
- la détermination que les organes de préhension des ensembles d'organes de préhension correspondant aux vannes dans leur position fermée sont aptes à saisir l'objet.

La séquence /K/ peut être réitérée avec au moins une autre vanne parmi la pluralité de vannes, la réitération de la séquence /K/ étant interrompue lorsque le niveau de vide N(k) mesuré à l'étape /Kc/ est supérieur ou égal au niveau de vide seuil.

La séquence /K/ peut comprendre une étape /Kf/ consécutive directement ou indirectement de l'étape /Kd/ et qui comprend l'actualisation du niveau de vide de référence pour coïncider avec le niveau de vide mesuré à l'étape /Kc/.

La séquence /K/ peut comprendre une étape /Kh/ consécutive directement ou indirectement de l'étape /Kd/ et qui comprend la commutation de ladite au moins une vanne parmi la pluralité de vannes dans la position fermée.

Le procédé peut comprendre une étape /E/ consécutive de la séquence itérative /K/ et qui comprend la commutation dans la position ouverte de chacune des vannes parmi la pluralité de vannes qui ont été identifiées comme étant associée à un ensemble d'organes de préhension correspondant présentant une fuite.

Le système préhenseur pneumatique peut comprendre un unique capteur de vide entre la source de vide et la pluralité de vannes.

Il est aussi proposé un programme informatique comportant des instructions pour la mise en oeuvre du procédé tel que décrit ci-avant.

Il est encore proposé un support d'enregistrement lisible par un ordinateur sur lequel est enregistré un programme pour la mise en oeuvre du procédé tel que décrit ci-avant lorsque ce programme est exécuté par un processeur.

Il est décrit également un système préhenseur pneumatique qui comprend une source de vide, une pluralité d'organes de préhension et un circuit pneumatique configuré pour mettre en communication fluidique la pluralité d'organes de préhension avec la source de vide. Le circuit pneumatique comprend une pluralité de vannes, chaque vanne étant associée à un ensemble d'un ou plusieurs organes de préhension correspondant parmi la pluralité d'organes de préhension, ladite vanne étant configurée pour commuter entre une position fermée dans laquelle ladite vanne met en communication fluidique ledit ensemble d'un ou plusieurs organes de préhension correspondant avec la source de vide et une position ouverte dans laquelle ladite vanne met en communication fluidique ledit ensemble d'un ou plusieurs organes de préhension correspondant avec l'atmosphère. Le système préhenseur pneumatique comprend en outre au moins un capteur de vide adapté pour mesurer un niveau de vide dans le circuit pneumatique entre la source de vide et la pluralité de vannes, et au moins une unité de commande pour exécuter le procédé tel que décrit ci-avant.

### Brève description des dessins

D'autres caractéristiques, détails et avantages apparaîtront à la lecture de la description détaillée ci-après, et à l'analyse des dessins annexés, sur lesquels :
Figure 1 représente un schéma d'un circuit pneumatique desservant des organes de préhension d'un système pneumatique préhenseur selon l'état de la technique connue.
Figure 2 représente une vue schématique d'un système pneumatique préhenseur selon la présente description.
Figure 3 représente un logigramme d'un procédé de contrôle de vide pour le système préhenseur pneumatique de la figure 2.
Figure 4 représente un schéma d'une première variante de circuit pneumatique desservant des organes de préhension du système pneumatique préhenseur de la figure 2.
Figure 5 représente un schéma d'une deuxième variante de circuit pneumatique desservant des organes de préhension du système pneumatique préhenseur de la figure 2.
Figure 6 représente un logigramme d'une première variante d'une séquence itérative du procédé de contrôle de la figure 3.
Figure 7 représente un logigramme d'une deuxième variante d'une séquence itérative du procédé de contrôle de la figure 3.
Figure 8 comprend des graphiques qui illustrent la mise en oeuvre du procédé selon un premier scénario.
Figure 9 comprend des graphiques qui illustrent la mise en oeuvre du procédé selon un deuxième scénario.
Figure 10 comprend des graphiques qui illustrent la mise en oeuvre du procédé selon un troisième scénario.
Figure 11 comprend des graphiques qui illustrent la mise en oeuvre du procédé selon un quatrième scénario.

### Description des modes de réalisation

Il est maintenant décrit un procédé P de contrôle de vide pour un système préhenseur pneumatique en référence aux figures 2 à 7. Ce procédé de contrôle de vide permet par exemple d'identifier une configuration du système préhenseur, en particulier en termes d'ouverture et fermeture de vannes, pour qu'il soit apte à saisir un objet.

Comme représenté aux figures 2, 4 et 5, le système préhenseur pneumatique 10 comprend une source de vide 26, une pluralité d'organes de préhension 13 et un circuit pneumatique 20 configuré pour mettre en communication fluidique la pluralité d'organes de préhension 13 avec la source de vide 26. Le circuit pneumatique 20 comprend une pluralité de vannes 27, chaque vanne 27 étant associée à un ensemble correspondant d'organes de préhension comprenant un ou plusieurs organes de préhension 13 parmi la pluralité d'organes de préhension 13. Chaque vanne 27 est configurée pour commuter entre une position fermée F dans laquelle ladite vanne 27 met en communication fluidique ledit ensemble d'organes de préhension 13 correspondant avec la source de vide 26 et une position ouverte O dans laquelle ladite vanne 27 met en communication fluidique ledit ensemble d'organes de préhension 13 correspondant avec l'atmosphère. Dans sa position ouverte, la vanne 27 met en communication fluidique ledit un ou lesdits plusieurs organes de préhension 13 correspondants avec l'atmosphère, tout en bloquant la communication fluidique entre la source de vide 26 et ledit un ou lesdits plusieurs organes de préhension 13 correspondants. Selon une formulation équivalente, la pluralité d'organes de préhension 13 peut comprendre au moins i organes de préhension 13, i étant un nombre entier supérieur ou égal à 2. Le circuit pneumatique 20 peut être configuré pour mettre en communication fluidique chacun des i organes de préhension 13 avec la source de vide 26. La pluralité de vannes 27 peut comprendre au moins j vannes 27, j étant un nombre entier supérieur ou égal à 2 et étant inférieur ou égal à i.

Le système préhenseur pneumatique 10 comprend en outre au moins un capteur de vide 28 adapté pour mesurer un niveau de vide dans le circuit pneumatique 20 entre la source de vide 26 et la pluralité de vannes 27. Selon une formulation équivalente, le capteur de vide 28 est adapté pour mesurer un niveau de vide en amont de la pluralité de vannes 27. Le niveau de vide mesuré par le capteur de vide 28 peut être exprimé en pourcentage. Dans le cas où le niveau de vide est à égal à 0%, cela signifie que la pression dans le circuit pneumatique 20 au niveau du capteur de vide 28 est égal à la pression atmosphérique. Dans le cas où le niveau de vide est à égal à 100%, cela signifie que la pression dans le circuit pneumatique 20 au niveau du capteur de vide 28 est nulle.

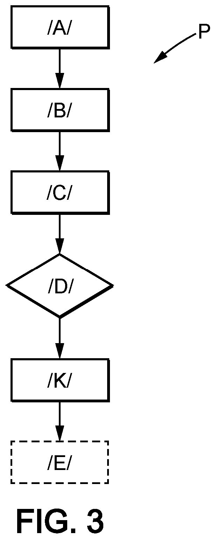

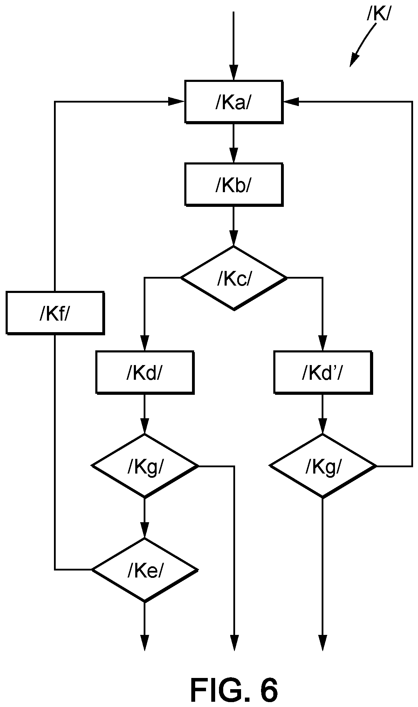

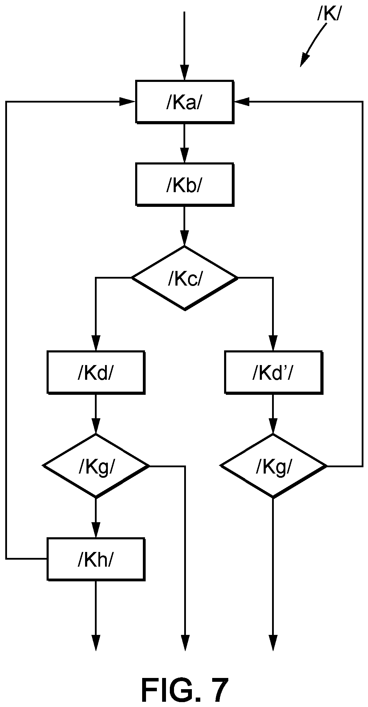

En référence au logigramme de la figure 3, le procédé P comprend :
- /A/ l'activation de la source de vide 26 afin d'établir une dépression entre la pluralité d'organes de préhension 13 et l'objet 100,
- /B/ la commutation de la pluralité de vannes 27 dans leur position fermée F respective,
- ICI le positionnement de la pluralité d'organes de préhension 13 sur un objet 100 à saisir,
- /D/ la mesure d'un niveau de vide de référence Nr par ledit capteur de vide 28,
le procédé P comprenant la séquence /K/, dont le logigramme est représenté selon la variante aux figures 6 et 7, suivante :
- /Ka/ la commutation dans la position ouverte O d'au moins une vanne 27 parmi la pluralité de vannes 27,
- /Kb/ la mesure d'un niveau de vide N(k) par ledit capteur de vide 28,
- /Kc/ la comparaison du niveau de vide N(k) mesuré avec le niveau de vide de référence Nr,
- /Kd/ la détermination que l'un au moins des organes de préhension 13 de l'ensemble d'organes de préhension correspondant à ladite au moins une vanne 27 présente une fuite dans le cas où le niveau de vide N(k) mesuré est supérieur au niveau de vide de référence Nr.

Le niveau de vide de référence correspond au niveau de vide mesuré à l'étape /D/, c'est-à-dire lorsque toutes les vannes sont dans en position fermée.

Le procédé P nécessite avantageusement au minimum qu'un seul capteur de vide 28, ce qui réduit la complexité du système pneumatique préhenseur et le coût d'un tel système pneumatique préhenseur. Par ailleurs, le procédé P permet d'identifier avec certitude la ou les vannes 27 associées à un ou des organes de préhension 13 présentant une fuite. Une fuite au niveau d'un organe de préhension 13 peut notamment résulter d'un mauvais positionnement dudit organe de préhension 13 sur l'objet 100 ou d'un état de surface de l'objet au niveau de l'organe de préhension non adapté ou mal adapté à la saisie, par exemple trop poreux, ou encore d'une défaillance d'un organe de préhension, d'une valve et/ou d'une conduite du système pneumatique.

Plus particulièrement, la séquence /K/ peut être dite « séquence itérative /K/ » et comprendre, de manière équivalente, une pluralité d'itérations, chaque itération étant définie par un rang k allant de 1 à n, n étant un entier supérieur ou égal 2, chaque itération de rang k comprenant :
- /Ka/ la commutation dans la position ouverte O respective d'au moins une k^{ème} vanne 27 parmi la pluralité de vannes 27, ladite k^{ème} vanne 27 étant de préférence respective de l'itération de rand k,
- /Kb/ la mesure d'un k^{ème} niveau de vide N(k) par ledit capteur de vide 28,
- /Kc/ la comparaison du k^{ème} niveau de vide N(k) mesuré au niveau de vide de référence Nr,
- /Kd/ la détermination qu'au moins un parmi lesdits un ou plusieurs organes de préhension 13 correspondants associés à ladite au moins une k^{ème} vanne 27 présente une fuite dans le cas où le k^{ème} niveau de vide N(k) mesuré est supérieur au niveau de vide de référence Nr.

Il peut être déterminé qu'au moins un parmi lesdits un ou plusieurs organes de préhension 13 correspondants associés à ladite au moins une k^{ème} vanne 27 présente une fuite lors de l'étape /Kd/ dans le cas où le k^{ème} niveau de vide N(k) est supérieur au niveau de vide de référence Nr d'au moins 10%, et de préférence d'au moins 5%. Dans la séquence itérative /K/ décrite ci-avant et ci-après, on comprend en outre que k est entier compris entre 1 et n.

La séquence /K/ peut comprendre une étape /Kd'/ de commutation de ladite au moins une vanne 27 dans la position fermée F dans le cas où le niveau de vide N(k) est égal au niveau de vide de référence Nr.

Aussi, en lien avec la formulation itérative de la séquence /K/, chaque itération de rang k peut comprendre une étape /Kd'/au lieu de l'étape /Kd/. L'étape /Kd'/ peut comprendre la commutation de la k^{ème} vanne 27 parmi la pluralité de vannes 27 dans la position fermée F respective dans le cas où le k^{ème} niveau de vide N(k) est égal au niveau de vide de référence Nr. Dans le cas où le k^{ème} niveau de vide N(k) est égal au niveau de vide de référence Nr, il peut être déduit qu'aucun desdits un ou plusieurs organes de préhension 13 correspondants associés à ladite au moins une k^{ème} vanne 27 ne présente une fuite. Le k^{ème} niveau de vide N(k) peut être dit égal au niveau de vide de référence Nr à plus ou moins 5% près, de préférence à plus ou moins 2% près, de préférence encore à plus ou moins 1% près. Les étapes /Kd'/ et /Kd/ sont exclusives l'une de l'autre. En ce sens, le procédé P comprend soit l'étape /Kd/, soit l'étape /Kd'/.

L'étape /D/ peut comprendre une étape subsidiaire qui comprend :
- la comparaison du niveau de vide de référence Nr à un niveau de vide seuil Ns, le niveau de vide seuil Ns étant déterminé pour correspondre à un niveau de vide suffisant pour permettre la préhension de l'objet 100, et
- la détermination que la pluralité d'organes de préhension 13 est apte à saisir l'objet si le niveau de vide de référence Nr est supérieur ou égal au niveau de vide seuil Ns.

Autrement dit, le niveau de vide seuil Ns peut être déterminé pour correspondre à un niveau de vide permettant d'obtenir une force de préhension par la pluralité d'organes de préhension 13 suffisante pour saisir et déplacer l'objet 100 sans que celui-ci ne se « décroche » de la pluralité d'organes de préhension.

En variante, le niveau de vide seuil Ns est déterminé pour correspondre à un niveau de vide pour lequel aucun parmi la pluralité d'organes de préhension 13 ne présente une fuite. En variante encore, le niveau de vide seuil Ns est déterminé pour correspondre à un niveau de vide pour lequel moins de 10%, de préférence moins de 5%, parmi la pluralité d'organes de préhension 13 présentent une fuite.

Le niveau de vide seuil peut être actualisé en fonction du nombre d'organes de préhension présentant une fuite afin d'obtenir la force de préhension suffisante pour saisir l'objet. Par exemple, si un organe de préhension parmi les n organes de préhension présente une fuite, le niveau de vide actualisé sera supérieur au niveau de vide initial car la masse de l'objet à saisir sera réparti sur n-1 organes de préhension au lieu de n organes de préhension.

La séquence /K/ peut ne pas être effectuée lorsque le niveau de vide de référence Nr est supérieur ou égal au niveau de vide seuil Ns. Cela permet de vérifier la nécessité de réaliser la séquence itérative /K/. Puisque la pluralité de vannes 27 est commutée dans leur position fermée F respective lors de l'étape /B/, il est possible d'obtenir un niveau de vide initial qui est déjà supérieur au niveau de vide seuil Ns. Par conséquent, il peut être choisi d'omettre la séquence itérative visant à identifier un ou des organes de préhension 13 présentant une fuite. La séquence /K/ peut donc être optionnelle. En effet, si le niveau de vide initial mesuré lors de l'étape /D/ est supérieur au niveau de vide seuil Ns, soit aucun organe de préhension 13 ne présente une fuite ou soit seuls certains organes de préhension 13 présentent une fuite sans que cela nuise à la préhension de l'objet 100.

Selon une autre formulation, la séquence /K/ est effectuée lorsque le niveau de vide de référence Nr est inférieur au niveau de vide seuil Ns. Selon une variante, la séquence itérative /K/ peut être effectuée si le niveau de vide de référence Nr est inférieur au niveau de vide seuil Ns d'au moins 10%, de préférence d'au moins 5%.

L'étape /Ka/ peut comprendre la commutation dans la position ouverte O respective d'une vanne 27 unique parmi la pluralité de vannes 27. Aussi, en lien avec la formulation itérative de la séquence /K/, l'étape /Ka/ de chaque itération de rang k peut comprendre la commutation dans la position ouverte O respective d'une k^{ème} vanne 27 unique parmi la pluralité de vannes 27, l'entier n étant de préférence égal au nombre de vannes 27 parmi la pluralité de vannes 27. Cela permet de contrôler de façon plus précise lesdits un ou plusieurs organes de préhension 13 correspondants associés à la k^{ème} vanne 27 unique. Autrement dit, lesdits un ou plusieurs organes de préhension 13 correspondants associés sont contrôlés individuellement.

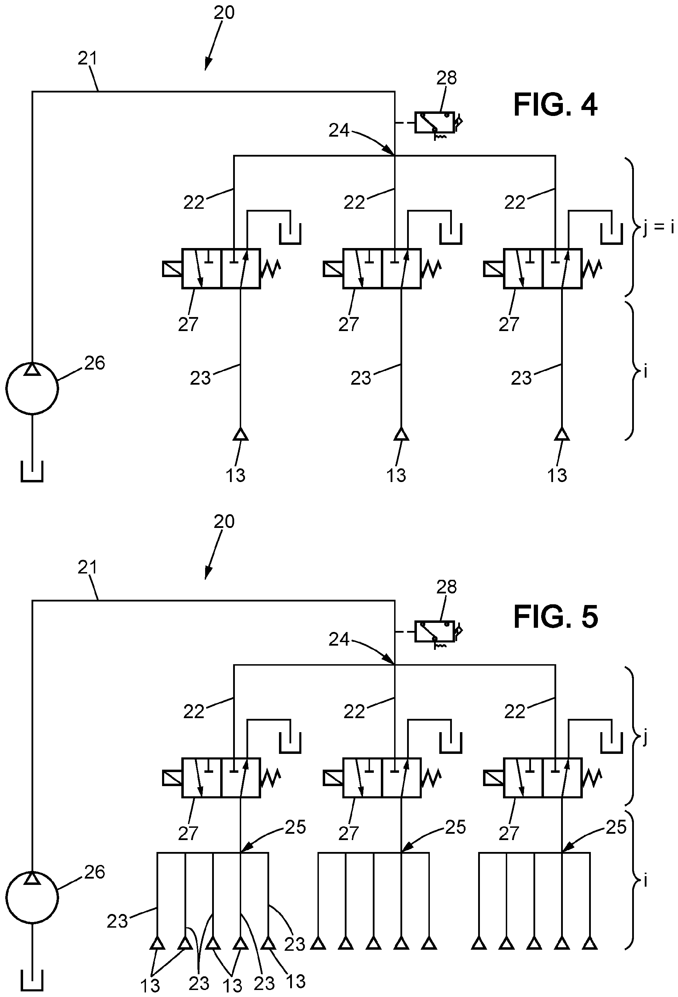

Préférentiellement, comme représenté à la figure 4, chaque vanne 27 peut être associée à un organe de préhension 13 unique correspondant parmi la pluralité d'organes de préhension 13. Cela permet un contrôle individuel pour chaque organe de préhension 13 et ainsi d'identifier de façon certaine un organe de préhension 13 qui fuit parmi la pluralité d'organes de préhension 13. Dans le cas où chaque vanne 27 est associée à un organe de préhension 13 unique correspondant parmi la pluralité d'organes de préhension 13 et l'étape /Ka/ de chaque itération de rang k comprend la commutation dans la position ouverte O respective d'une k^{ème}vanne 27 unique parmi la pluralité de vannes 27, alors l'entier n peut être égal au nombre d'organes de préhension 13 parmi la pluralité d'organe de préhension 13.

L'étape /Ka/ de chaque itération de rang k peut comprendre la commutation dans la position ouverte O respective d'une pluralité de k^{ème} vannes 27 parmi la pluralité de vannes 27. En particulier, l'étape /Ka/ de chaque itération de rang k peut comprendre la commutation dans la position ouverte O respective d'un groupe de k^{ème} vannes 27 parmi la pluralité de vannes 27. Autrement dit, la pluralité de vannes 27 peut être divisée en groupes de vannes 27, chaque itération de rang k comprenant la commutation dans la position ouverte O des vannes 27 de l'un des groupes de vannes 27 lors de l'étape /Ka/, ces vannes 27 étant dites « k^{ème} vannes 27 ». Une telle approche permet de réaliser une identification dichotomique des organes de préhension 13 présentant une fuite, qui est avantageusement rapide lorsqu'un faible nombre d'organes de préhension 13 parmi la pluralité d'organes de préhension 13 présentent une fuite. On accélère ainsi l'identification de la ou des vannes 27 associées à un ou des organes de préhension 13 présentant une fuite.

La séquence /K/ peut être réitérée avec au moins une autre vanne 27 parmi la pluralité de vannes. La séquence /K/ peut aussi être réitérée avec chaque vanne 27 parmi la pluralité de vannes. Aussi, en lien avec la formulation itérative de la séquence /K/, chaque vanne 27 parmi la pluralité de vannes 27 peut être commutée dans la position ouverte O respective pendant l'étape /Ka/ d'au moins une itération de rang k parmi la pluralité d'itérations de la séquence itérative /K/. On s'assure ainsi d'identifier chacune des vannes 27 associées à un ou des organes de préhension 13 présentant une fuite.

La séquence itérative peut être interrompue après l'itération de rang n. Chaque itération de rang k peut comprendre une étape /Kg/ consécutive directement ou indirectement de l'étape /Kd/ ou /Kd'/ et qui comprend l'incrémentation du rang k de 1 et la comparaison du rang k à l'entier n. Dans le cas où le rang k est égal à l'entier n, alors la séquence itérative est interrompue.

En référence à la variante de la figure 6, la séquence /K/ peut comprendre une étape /Ke/ consécutive directement ou indirectement de l'étape /Kd/ et qui comprend la comparaison du niveau de vide N(k) mesuré lors de l'étape /Kc/ par rapport au niveau de vide seuil Ns. L'étape /Ke/ peut aussi comprendre la détermination que les organes de préhension 13 des ensembles d'organes de préhension correspondant aux vannes dans leur position fermée F sont aptes à saisir l'objet si ce niveau de vide de référence (N(k)) mesuré est supérieur ou égal au niveau seuil Ns.

La séquence /K/ peut être réitérée avec au moins une autre vanne 27 parmi la pluralité de vannes, la réitération de la séquence /K/ étant interrompue lorsque le niveau de vide N(k) mesuré à l'étape /Kc/ est supérieur ou égal au niveau de vide seuil Ns.

Aussi, en lien avec la formulation itérative de la séquence /K/, l'étape /Ke/ comprend la comparaison du k^{ème} niveau de vide N(k) mesuré lors de l'étape /Kc/ de l'itération de rang k par rapport au niveau de vide seuil Ns, la séquence itérative /K/ étant interrompue après l'étape /Ke/ de l'itération de rang k au cours de laquelle le k^{ème} niveau de vide N(k) mesuré lors de l'étape /Kc/ est supérieur ou égal au niveau de vide seuil Ns. Cela permet d'interrompre le procédé P dès lors que le niveau de vide seuil Ns est atteint, c'est-à-dire dès que l'on peut être sûr qu'aucun organe de préhension 13 ne présente une fuite ou que l'on peut s'assurer de la préhension de l'objet 100 et ainsi raccourcir le temps d'exécution du procédé P. Autrement dit, la séquence itérative /K/ peut être répétée jusqu'à ce que le niveau de vide mesuré atteigne le niveau de vide seuil Ns. Aussi, la séquence itérative /K/ peut donc être interrompue avant l'itération de rang n, dès l'itération de rang k au cours de laquelle le k^{ème} niveau de vide N(k) mesuré lors de l'étape /Kc/ est supérieur ou égal au niveau de vide seuil Ns. L'étape /Ke/ peut être consécutive directement ou indirectement de l'étape /Kg/.

La séquence /K/ comprend une étape /Kf/ consécutive directement ou indirectement de l'étape /Kd/ et qui comprend l'actualisation du niveau de vide de référence Nr pour coïncider avec le niveau de vide N(k). Aussi, en lien avec la formulation itérative de la séquence /K/, chaque itération de rang k peut comprendre une étape /Kf/ consécutive directement ou indirectement de l'étape /Kd/ et qui comprend l'actualisation du niveau de vide de référence Nr pour coïncider avec le k^{ème} niveau de vide N(k). Exprimé autrement, la valeur du niveau de vide de référence Nr, correspondant initialement à la mesure du niveau de vide lors de l'étape /D/ (ou éventuellement de l'étape /Kb/ de l'itération précédente (c'est-à-dire de rang k-1) dans le cas de la séquence itérative), est remplacée par la valeur du niveau de vide mesurée lors de l'étape /Kb/. Il s'agit d'une mise à jour du niveau de vide de référence Nr au niveau de vide mesuré lors de l'étape /Kb/. En ce sens, le niveau de vide de référence est une variable tampon, c'est-à-dire dont la valeur est modifiable, utilisée pour comparer et évaluer les niveaux de vide mesurés ultérieurement.

Selon la variante de la figure 7, la séquence /K/ comprend une étape /Kh/ consécutive directement ou indirectement de l'étape /Kd/ et qui comprend la commutation de ladite au moins une vanne 27 parmi la pluralité de vannes 27 dans la position fermée F. Aussi, en lien avec la formulation itérative de la séquence /K/, chaque itération de rang k peut comprendre une étape /Kh/ consécutive directement ou indirectement de l'étape /Kd/ et qui comprend la commutation de ladite au moins une k^{ème} vanne 27 parmi la pluralité de vannes 27 dans la position fermée F respective. La comparaison du k^{ème} niveau de vide N(k) à chaque itération de rang k peut être réalisée par rapport au niveau de vide de référence Nr mesuré à l'étape /D/. On évite ainsi d'actualiser le niveau de vide de référence Nr, économisant ainsi de la puissance de calcul et de la mémoire informatique.
Selon la variante de la figure 7, les étapes /Ke/ et /Kf/ ne sont pas réalisées.

Toujours selon la variante de la figure 7, le procédé P peut comprendre une étape /E/ consécutive de la séquence itérative /K/ et qui comprend la commutation dans la position ouverte O de chacune des vannes 27 parmi la pluralité de vannes 27 qui ont été identifiées comme étant associée à un ensemble d'organes de préhension 13 correspondant présentant une fuite.

Selon une variante équivalente du procédé tel que décrit ci-avant, le capteur de vide 28 peut être adapté pour mesurer une pression dans le circuit pneumatique 20 entre la source de vide 26 et la pluralité de vannes 27. La pression peut être mesurée en Pa ou en bar ou tout autre unité de pression. Selon cette variante, il est identifié lors de l'étape /Kd/ qu'au moins un parmi lesdits un ou plusieurs organes de préhension 13 correspondants associés à ladite au moins une k^{ème} vanne 27 présente une fuite dans le cas où la k^{ème} pression est inférieure à une pression de référence mesurée lors de l'étape /D/. Selon cette variante, l'étape subsidiaire de l'étape /D/ peut comprendre la comparaison de la pression de référence à une pression seuil, la séquence itérative /K/ étant effectuée si la pression de référence est supérieure à la pression seuil. La pression seuil peut être déterminée de manière similaire au niveau de vide seuil Ns.

Selon un autre aspect, il peut être proposé un procédé de déplacement dudit objet 100 d'un point initial à un point final par le système pneumatique préhenseur 10, ledit procédé de déplacement étant réalisé après le procédé P de contrôle de vide.

Il est maintenant décrit plus en détail le système pneumatique préhenseur 10 en référence aux figures 2, 4 et 5.

Le système préhenseur pneumatique 10 peut comprendre un bras robotisé 11. Chacun des organes de préhension 13 peut être relié à une extrémité mobile 12 du bras robotisé 11. Le circuit pneumatique 20 peut être intégré au bras robotisé 11. Le bras robotisé 11 peut être un bras polyarticulé, notamment définissant au moins six axes de rotation et qui est adapté pour déplacer et/ou orienter l'extrémité mobile 12 suivant six degrés de liberté.

Le circuit pneumatique 20 peut comprendre au moins une conduite primaire 21. La source de vide 26 peut être agencée au niveau de la conduite primaire 21. Ledit au moins un capteur peut être adapté pour mesurer un niveau de vide au niveau de la conduite primaire 21.

Le circuit pneumatique 20 peut comprendre une pluralité de conduites secondaires 22. Chaque vanne 27 parmi la pluralité de vannes 27 peut être agencée au niveau d'une conduite secondaire 22 respective parmi la pluralité de conduites secondaires 22. Le circuit pneumatique 20 peut comprendre au moins un noeud primaire 24 reliant la conduite primaire 21 à une ou plusieurs, voire toutes, parmi la pluralité de conduites secondaires 22.

Le circuit pneumatique 20 peut comprendre une pluralité de conduites tertiaires 23. Chaque organe de préhension 13 parmi la pluralité d'organes de préhension 13 peut être agencé au niveau d'une conduite tertiaire 23 parmi la pluralité de conduites tertiaires 23. Le circuit pneumatique 20 peut comprendre au moins un noeud secondaire 25 reliant la conduite secondaire 22 de chaque vanne 27 à une ou plusieurs, voire toutes, parmi les conduites tertiaires 23 desservant lesdits un ou plusieurs organes de préhension 13 correspondants associés à ladite vanne 27.

Chaque vanne 27 peut être de type « 3/2 », en ce sens elle distribue le fluide entre trois voies, typiquement une entrée, une sortie et un échappement. Le circuit pneumatique 20 peut comprendre une conduite annexe reliée à l'échappement de chaque vanne 27. En variante non limitative, la vanne peut être une vanne 4/2 ou un ensemble de vannes 2/2.

De manière particulièrement avantageuse, dans le procédé tel que décrit ci-avant, le système préhenseur pneumatique 10 comprend un unique capteur de vide 28 entre la source de vide 26 et la pluralité de vannes 27. Alternativement, le système pneumatique préhenseur peut comprendre au moins deux capteurs de vide 28 adapté pour mesurer un niveau de vide dans le circuit pneumatique 20 entre la source de vide 26 et la pluralité de vannes 27. On obtient ainsi un système redondant en cas de défaillance de l'un des capteurs par exemple. De préférence, le système pneumatique préhenseur peut comprendre au moins trois capteurs de vide 28 adapté pour mesurer un niveau de vide dans le circuit pneumatique 20 entre la source de vide 26 et la pluralité de vannes 27. Cela permet d'identifier une mesure erronée de l'un des capteurs.

Par ailleurs, le système préhenseur pneumatique 10 peut comprendre un ou plusieurs organes de préhension 13 supplémentaires par rapport à ladite pluralité d'organes de préhension 13, lesdits un ou plusieurs organes de préhension 13 supplémentaires n'étant pas requis pour la préhension de l'objet 100. Aussi, le système pneumatique préhenseur peut comprendre une ou plusieurs vannes 27 supplémentaires par rapport à ladite pluralité de vannes 27. Autrement dit, le système pneumatique préhenseur peut comprendre au total I organes de préhension 13 et J vannes 27, I et J étant des nombres entiers respectivement supérieurs à i et j.

La source de vide peut être une pompe à vide motorisée mécanique ou un générateur de vide venturi.

Un ou plusieurs, voir tous, parmi les i organes de préhension 13 peut comprendre une ventouse. Dans le cas d'une ventouse, on comprend qu'une fuite peut subvenir lorsque la bouche ou jupe latérale de la ventouse n'est pas en contact avec l'objet à saisir sur toute sa circonférence. Une telle absence de contact peut résulter d'un mauvais positionnement de la ventouse, des dimensions de l'objet, d'un état de surface non régulier de l'objet ou d'une ventouse endommagée.

Selon un autre aspect, il peut être prévu un programme informatique comportant des instructions pour la mise en oeuvre du procédé P tel que décrit ci-avant.

Selon un autre aspect, il peut être prévu un support d'enregistrement lisible par un ordinateur sur lequel est enregistré un programme pour la mise en oeuvre du procédé P tel que décrit ci-avant lorsque ce programme est exécuté par un processeur.

Enfin, il peut être prévu au moins une unité de commande pour exécuter le procédé P tel que décrit ci-avant.

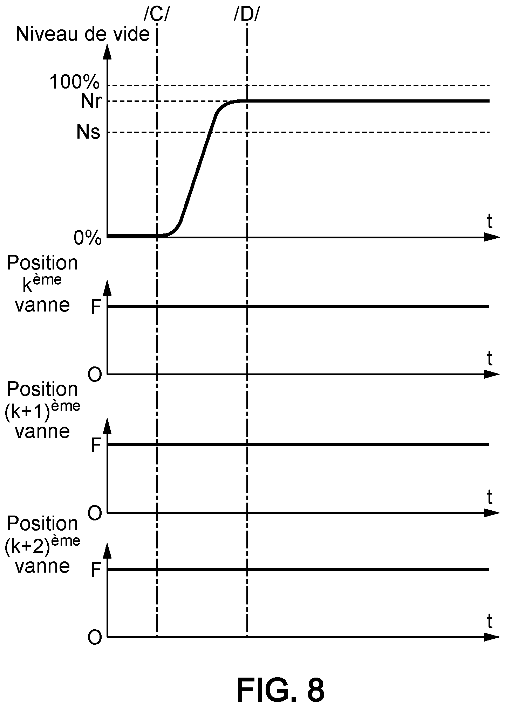

Il est maintenant décrit, en référence aux figures 8 à 11, plusieurs scénarios de mise en oeuvre du procédé de contrôle telque décrit ci-avant. Les figures 8 à 11 comprennent respectivement un graphique qui illustre l'évolution du niveau de vide tel que mesuré par le capteur de vide 28 au cours du procédé et la position de trois vannes 27 au cours du procédé, en l'occurrence la position d'une k^{ème} vannes 27, (k+1)^{ème} vanne 27 et une (k+2)^{ème} vanne 27. Dans chacun des scénarios, chacune des k^{ème}, (k+1)^{ème}, (k+2)^{ème} vannes 27 peut être commutée individuellement pendant une itération respective de rang k, k+1 et k+2. Selon un cas particulier, l'entier n peut être égal à 3 de sorte que le système pneumatique préhenseur 10 comprend une première vanne 27, une deuxième vanne 27 et une troisième vanne 27 coïncidant avec respectivement la k^{ème} vanne 27, la (k+1)^{ème} vanne 27 et la (k+2)^{ème} vannes 27, et commutée individuellement respectivement au cours d'une itération de rang 1, une itération de rang 2 et une itération de rang 3 de la séquence itérative /K/.

Dans chacun des scénarios des figures 8 à 11, le procédé est considéré initialement dans un état où les étapes /A/ et /B/ ont été réalisées.

Dans chacun des scénarios des figures 8 à 11, il est représenté la réalisation de l'étape ICI qui entraine une augmentation du niveau de vide de 0% au niveau de vide de référence Nr. Dans chacun des scénarios des figures 8 à 11, il est représenté la réalisation de l'étape /D/ au cours de laquelle le niveau de vide de référence Nr est mesuré par ledit au moins un capteur de vide 28.

Tout d'abord, il est fait référence au scénario de la figure 8. Le niveau de vide de référence Nr initial mesuré lors de l'étape /D/ est supérieur au niveau de vide seuil Ns. Dans ce cas, la séquence itérative /K/ est avantageusement omise afin de réduire le temps de réalisation du procédé P de contrôle de vide. Ainsi, comme visible à la figure 8, chacune des vannes 27 restent dans la position fermée respective.

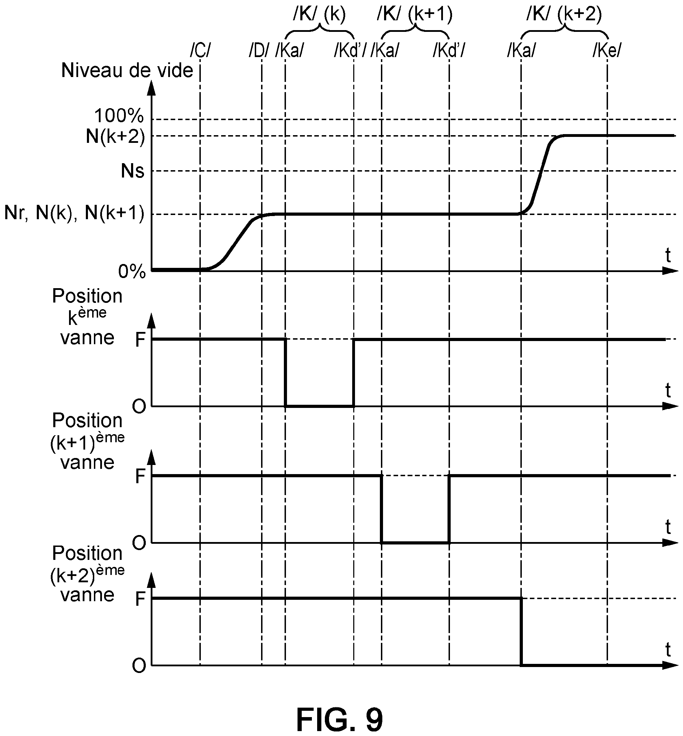

Il est maintenant fait référence au scénario de la figure 9. Le niveau de vide de référence Nr initial mesuré lors de l'étape /D/ est inférieur au niveau de vide seuil Ns. La séquence itérative /K/ est alors initiée :
- Une itération de rang k est réalisée au cours de laquelle la k^{ème} vanne 27 est commutée dans la position ouverte respective. Le k^{ème} niveau de vide N(k) est ici égal au niveau de vide de référence Nr. Il est déduit qu'aucun desdits un ou plusieurs organes de préhension 13 correspondants associés à ladite au moins une k^{ème} vanne 27 ne présente une fuite. Aussi, la k^{ème} vanne 27 est commutée dans la position fermée respective ;
- Une itération de rang k+1 est réalisée au cours de laquelle la (k+1)^{ème} vanne 27 est commutée dans la position ouverte respective. Le (k+1)^{ème} niveau de vide N(k+1) est ici égal au niveau de vide de référence Nr. Il est déduit qu'aucun desdits un ou plusieurs organes de préhension 13 correspondants associés à ladite au moins une (k+1)^{ème} vanne 27 ne présente une fuite. Aussi, la (k+1)^{ème} vanne 27 est commutée dans la position fermée respective ;
- Une itération de rang k+2 est réalisée au cours de laquelle la (k+2)^{ème} vanne 27 est commutée dans la position ouverte respective. Le (k+2)^{ème} niveau de vide (N(k+2)) est ici supérieur au niveau de vide de référence Nr. L'augmentation du (k+2)^{ème} niveau de vide (N(k+2)) par rapport au niveau de vide de référence Nr est due à la suppression d'une source de fuite du circuit pneumatique 20. Il est déduit qu'au moins un desdits un ou plusieurs organes de préhension 13 correspondants associés à ladite au moins une k^{ème} vanne 27 présente une fuite. Dans l'exemple illustré, la (k+2)^{ème} vanne 27 est maintenue dans la position ouverte respective. Autrement dit, l'itération de rang k+2 est achevée sans que la (k+2)^{ème} vanne 27 ne soit commutée dans la position fermée respective. Enfin, selon le scénario illustré, le (k+2)^{ème} niveau de vide (N(k+2)) est supérieur au niveau de vide seuil. La séquence itérative est alors interrompue soit parce qu'il est déduit qu'aucun des organes de préhension 13 correspondants associés à une autre vanne 27 que les k^{ème}, (k+1)^{ème}, (k+2)^{ème} vannes 27 ne présente une fuite, soit parce qu'il est déduit que le niveau de vide atteint est suffisant pour permettre la préhension de l'objet 100 par le système pneumatique préhenseur 10.

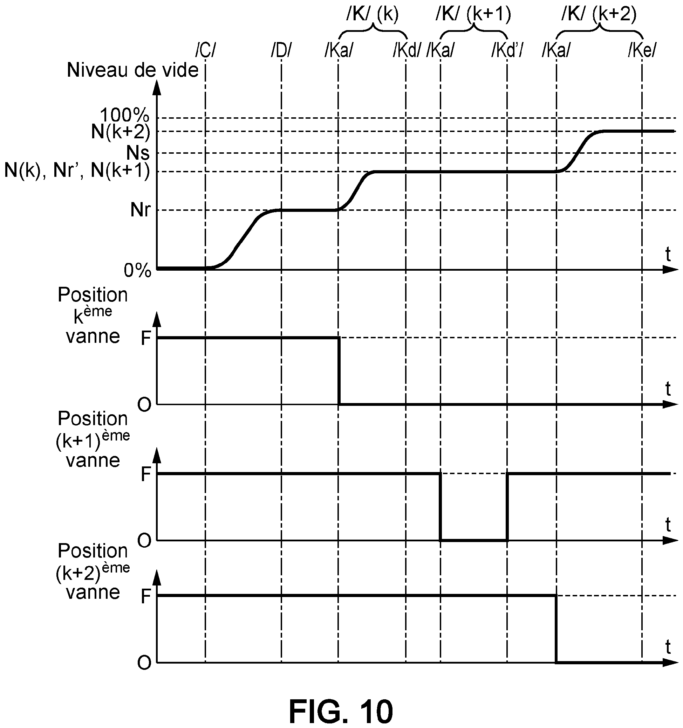

Il est maintenant fait référence au scénario de la figure 10. Le scénario de la figure 10 diffère du scénario de la figure 9 en ce que le k^{ème} niveau de vide N(k) est ici supérieur au niveau de vide de référence Nr. Il est déduit qu'au moins un desdits un ou plusieurs organes de préhension 13 correspondants associés à ladite au moins une k^{ème} vanne 27 présente une fuite. Consécutivement, le niveau de vide de référence Nr est actualisé pour coïncider avec le k^{ème} niveau de vide N(k). Autrement dit, il est défini un niveau de vide de référence actualisé Nr' correspondant au k^{ème} niveau de vide N(k). De manière remarquable, dans l'exemple illustré, l'itération de rang k est achevée sans que la k^{ème} vanne 27 ne soit commutée dans la position fermée respective et la k^{ème} vanne 27 est maintenue dans la position ouverte respective au cours des itérations k+1 et k+2 suivantes. Les itérations de rang k+1 et k+2 sont identiques au scénario de la figure 9.

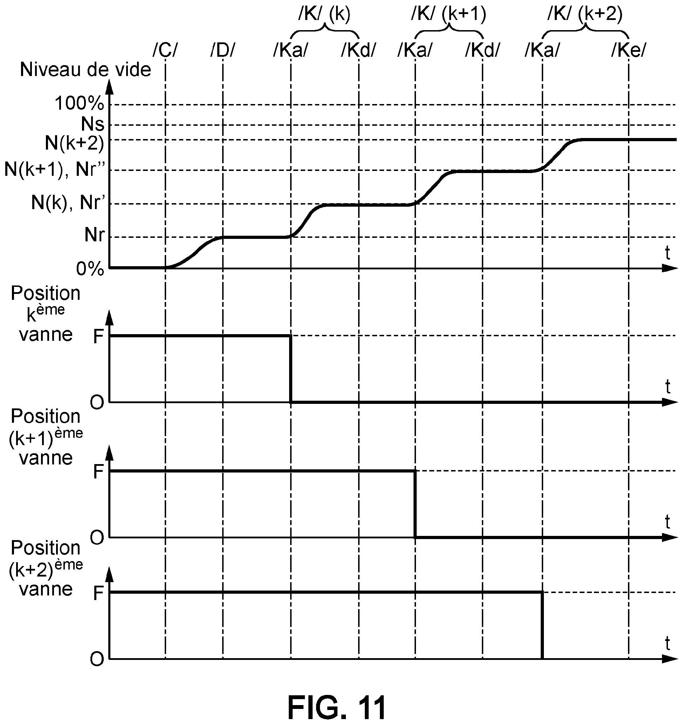

Il est maintenant fait référence au scénario de la figure 11. Le scénario de la figure 11 diffère du scénario de la figure 10 en ce que le (k+1)^{ème} niveau de vide N(k+1) est ici supérieur au niveau de vide de référence Nr, en l'occurrence le niveau de vide de référence actualisé Nr'. Il est déduit qu'au moins un desdits un ou plusieurs organes de préhension 13 correspondants associés à ladite au moins une (k+1)^{ème} vanne 27 présente une fuite. Consécutivement, le niveau de vide de référence Nr est à nouveau actualisé pour coïncider avec le (k+1)^{ème} niveau de vide N(k+1). Autrement dit, il est défini un niveau de vide de référence actualisé Nr" correspondant au (k+1)^{ème} niveau de vide N(k+1). Dans l'exemple illustré, l'itération de rang k+1 est achevée sans que la (k+1)^{ème} vanne 27 ne soit commutée dans la position fermée respective et la (k+1)^{ème} vanne 27 est maintenue dans la position ouverte respective au cours de l'itération k+2 suivante.

Dans le scénario de la figure 11, chacune des k^{ème}, (k+1)^{ème}, (k+2)^{ème} vannes 27 sont associées à au moins un organe de préhension 13 correspondant qui présente une fuite, par exemple un organe de préhension 13 correspondant mal positionné sur l'objet.

Enfin, de manière remarquable, le (k+2)^{ème} niveau de vide N(k+2) est inférieur au niveau de vide seuil. La séquence itérative /K/ peut être répétée selon une nouvelle itération si le rang k+2 est inférieur à l'entier n n'est pas atteint, par exemple si certaines vannes 27 n'ont pas été contrôlées en faisant l'objet d'une itération de la séquence itérative /K/. En revanche, si le rang k+2 est égal à l'entier n alors la séquence itérative est interrompue. Dans ce cas, il peut par exemple être déduit que le niveau de vide final correspondant au (k+2)^{ème} niveau de vide N(k+2) ne permet pas la préhension de l'objet 100. Aussi, la pluralité d'organes de préhension 13 peut être à nouveau positionnée sur l'objet 100 à un emplacement différent et le procédé de contrôle peut être répété.

## Revendications

1. Procédé (P) de contrôle de vide pour un système préhenseur pneumatique (10) qui comprend une source de vide (26), une pluralité d'organes de préhension (13) et un circuit pneumatique (20) configuré pour mettre en communication fluidique la pluralité d'organes de préhension (13) avec la source de vide (26), le circuit pneumatique (20) comprenant une pluralité de vannes (27), chaque vanne (27) étant associée à un ensemble correspondant d'organes de préhension comprenant un ou plusieurs organes de préhension (13) parmi la pluralité d'organes de préhension (13), chaque vanne (27) étant configurée pour commuter entre une position fermée (F) dans laquelle ladite vanne (27) met en communication fluidique ledit ensemble d'organes de préhension (13) correspondant avec la source de vide (26) et une position ouverte (O) dans laquelle ladite vanne (27) met en communication fluidique ledit ensemble d'organes de préhension (13) correspondant avec l'atmosphère, le système préhenseur pneumatique (10) comprenant en outre au moins un capteur de vide (28) adapté pour mesurer un niveau de vide dans le circuit pneumatique (20) entre la source de vide (26) et la pluralité de vannes (27), le procédé (P) comprenant :
- /A/ l'activation de la source de vide (26) en vue d'établir une dépression entre la pluralité d'organes de préhension (13) et un objet (100) à saisir,
- /B/ la commutation de la pluralité de vannes (27) dans leur position fermée (F) respective,
- ICI le positionnement de la pluralité d'organes de préhension (13) sur l'objet (100),
- /D/ la mesure d'un niveau de vide de référence (Nr) par ledit capteur de vide (28),
le procédé (P) comprenant la séquence /K/ suivante :
- /Ka/ la commutation dans la position ouverte (O) d'au moins une vanne (27) parmi la pluralité de vannes (27),
- /Kb/ la mesure d'un niveau de vide (N(k)) par ledit capteur de vide (28),
- /Kc/ la comparaison du niveau de vide (N(k)) mesuré avec le niveau de vide de référence (Nr),
- /Kd/ la détermination que l'un au moins des organes de préhension (13) de l'ensemble d'organes de préhension correspondant à ladite au moins une vanne (27) présente une fuite dans le cas où le niveau de vide (N(k)) mesuré est supérieur au niveau de vide de référence (Nr).

2. Procédé (P) selon la revendication 1, dans lequel la séquence /K/ comprend une étape /Kd'/ de commutation de ladite au moins une vanne (27) dans la position fermée (F) dans le cas où le niveau de vide (N(k)) mesuré est égal au niveau de vide de référence (Nr).

3. Procédé (P) selon l'une quelconque des revendications précédentes, dans lequel l'étape /D/ comprend une étape subsidiaire qui comprend :
- la comparaison du niveau de vide de référence (Nr) à un niveau de vide seuil (Ns), le niveau de vide seuil (Ns) étant déterminé pour correspondre à un niveau de vide suffisant pour permettre la préhension de l'objet (100), et
- la détermination que la pluralité d'organes de préhension (13) est apte à saisir l'objet si le niveau de vide de référence (Nr) est supérieur ou égal au niveau de vide seuil (Ns).

4. Procédé (P) selon la revendication 3, dans lequel la séquence /K/ n'est pas effectuée lorsque le niveau de vide de référence (Nr) est supérieur ou égal au niveau de vide seuil (Ns).

5. Procédé (P) selon l'une quelconque des revendications précédentes, dans lequel l'étape /Ka/ comprend la commutation dans la position ouverte (O) respective d'une vanne (27) unique parmi la pluralité de vannes (27).

6. Procédé selon l'une quelconque des revendications 1 à 5, dans lequel la séquence /K/ est réitérée avec au moins une autre vanne (27) parmi la pluralité de vannes.

7. Procédé selon l'une quelconque des revendications 1 à 6, dans lequel la séquence /K/ est réitérée avec chaque vanne (27) parmi la pluralité de vannes.

8. Procédé (P) selon l'une quelconque des revendications précédentes, la revendication 3 s'appliquant, dans lequel la séquence /K/ comprend une étape /Ke/ consécutive directement ou indirectement de l'étape /Kd/ et qui comprend :
- la comparaison du niveau de vide (N(k)) mesuré lors de l'étape /Kb/ par rapport au niveau de vide seuil (Ns) et
- la détermination que les organes de préhension (13) des ensembles d'organes de préhension correspondant aux vannes dans leur position fermée (F) sont aptes à saisir l'objet si le niveau de vide de référence (N(k)) mesuré est supérieur ou égal au niveau seuil (Ns).

9. Procédé selon l'une quelconque des revendications précédentes, la revendication 3 s'appliquant, dans lequel la séquence /K/ est réitérée avec au moins une autre vanne (27) parmi la pluralité de vannes, la réitération de la séquence /K/ étant interrompue lorsque le niveau de vide (N(k)) mesuré à l'étape /Kb/ est supérieur ou égal au niveau de vide seuil (Ns).

10. Procédé (P) selon l'une quelconque des revendications 1 à 9, dans lequel la séquence /K/ comprend une étape /Kf/ consécutive directement ou indirectement de l'étape /Kd/ et qui comprend l'actualisation du niveau de vide de référence (Nr) pour coïncider avec le niveau de vide (N(k)).

11. Procédé (P) selon l'une quelconque des revendications 1 à 10, dans lequel la séquence /K/ comprend une étape /Kh/ consécutive directement ou indirectement de l'étape /Kd/ et qui comprend la commutation de ladite au moins une vanne (27) parmi la pluralité de vannes (27) dans la position fermée (F).

12. Procédé (P) selon la revendication précédente, lequel comprenant une étape /E/ consécutive de la séquence itérative /K/ et qui comprend la commutation dans la position ouverte (O) de chacune des vannes (27) parmi la pluralité de vannes (27) qui ont été identifiées comme étant associée à un ensemble d'organes de préhension (13) correspondant présentant une fuite.

13. Procédé (P) selon l'une quelconque des revendications 1 à 12 dans lequel le système préhenseur pneumatique (10) comprend un unique capteur de vide (28) entre la source de vide (26) et la pluralité de vannes (27).

14. Programme informatique comportant des instructions pour la mise en oeuvre du procédé (P) selon l'une quelconque des revendications précédentes.

15. Support d'enregistrement lisible par un ordinateur sur lequel est enregistré un programme pour la mise en oeuvre du procédé (P) selon l'une quelconque des revendications 1 à 13 lorsque ce programme est exécuté par un processeur.

16. Un système préhenseur pneumatique (10) qui comprend une source de vide (26), une pluralité d'organes de préhension (13) et un circuit pneumatique (20) configuré pour mettre en communication fluidique la pluralité d'organes de préhension (13) avec la source de vide (26), le circuit pneumatique (20) comprenant une pluralité de vannes (27), chaque vanne (27) étant associée à un ensemble d'un ou plusieurs organes de préhension (13) correspondant parmi la pluralité d'organes de préhension (13), ladite vanne (27) étant configurée pour commuter entre une position fermée (F) dans laquelle ladite vanne (27) met en communication fluidique ledit ensemble d'un ou plusieurs organes de préhension (13) correspondant avec la source de vide (26) et une position ouverte (O) dans laquelle ladite vanne (27) met en communication fluidique ledit ensemble d'un ou plusieurs organes de préhension (13) correspondant avec l'atmosphère, le système préhenseur pneumatique (10) comprenant en outre au moins un capteur de vide (28) adapté pour mesurer un niveau de vide dans le circuit pneumatique (20) entre la source de vide (26) et la pluralité de vannes (27), et au moins une unité de commande pour exécuter le procédé (P) selon l'une quelconque des revendications 1 à 13.
